# FASCICULE DE BREVET EUROPEEN

(11) **EP 3 460 664 B1**
(45) Date de publication et mention de la délivrance du brevet: **17.06.2020**
(21) Numéro de dépôt: 18196330.7
(22) Date de dépôt: 24.09.2018
(51) Int. Cl.: G06F 11/07, G06F 11/30, G06F 11/34, G06F 8/61, G06F 9/445

(54) **PROCÉDÉ DE GESTION DE MODULES LOGICIELS EMBARQUÉS POUR UN CALCULATEUR ÉLECTRONIQUE D'UN APPAREIL ÉLECTRIQUE DE COUPURE**
VERFAHREN ZUR STEUERUNG VON INTEGRIERTEN SOFTWAREMODULEN FÜR EINEN ELEKTRONISCHEN RECHNER EINES ELEKTRISCHEN STROMUNTERBRECHUNGSGERÄTS
METHOD FOR MANAGING ONBOARD SOFTWARE MODULES FOR AN ELECTRONIC CALCULATOR OF AN ELECTRICAL SWITCHGEAR

(30) Priorité: 25.09.2017 FR 1758826
(43) Date de publication de la demande: 27.03.2019
(73) Titulaire: Schneider Electric Industries SAS, 92500 Rueil-Malmaison (FR)
(72) Inventeur: BUFFERNE, Vincent, 38050 GRENOBLE CEDEX 09 (FR); POPOVIC, Vladimir, 38050 GRENOBLE CEDEX 09 (FR)
(74) Mandataire: Lavoix

(56) Documents cités:
- US-A1- 2005 257 199
- US-A1- 2008 141 240
- US-A1- 2009 072 022
- US-A1- 2010 031 243
- US-A1- 2012 216 213

## Description

La présente invention concerne un procédé de gestion de modules logiciels embarqués exécutés par un calculateur électronique embarqué d'un appareil électrique de coupure. L'invention concerne également un appareil électrique de coupure comportant un calculateur électronique embarqué programmé pour la mise en oeuvre de ce procédé de gestion.

L'invention concerne notamment le domaine des appareils de coupure d'un courant électrique, tels que des disjoncteurs à basse tension, pourvus d'un calculateur électronique embarqué pour exécuter des logiciels embarqués.

De nos jours, de tels logiciels permettent de mettre en oeuvre des fonctionnalités avancées qui améliorent le fonctionnement de ces appareils, telles que des fonctions de commande, de supervision et de gestion à distance.

Les demandes de brevet US 2009/072022 A1 et US 2010/031243 A1 décrivent des exemples de tels logiciels embarqués dans des appareils de coupure.

Il est souhaitable de pouvoir faire évoluer ces logiciels au cours du temps et en fonction des besoins des utilisateurs. Par exemple, les utilisateurs peuvent choisir de n'utiliser que les fonctionnalités qui les intéressent en fonction de l'usage auquel l'appareil est destiné. Ils peuvent également vouloir rajouter ou enlever certaines fonctions, si leurs besoins évoluent au cours du temps. Cela permet aussi au fabricant de faire évoluer les appareils tout au long de leur durée de vie, voire de proposer aux utilisateurs des fonctionnalités spécifiques conçues sur mesure en fonction de besoins particuliers. En effet, il n'est pas toujours possible de savoir, lors de la conception d'un produit, quel sera l'usage qui en sera fait par les utilisateurs tout au long du cycle de vie de ce produit.

Un tel comportement évolutif doit pouvoir être facile et rapide à mettre en oeuvre par les utilisateurs.

Toutefois, les fonctions mises en œuvre par ces logiciels peuvent porter sur des fonctions essentielles de l'appareil électrique, telles que des fonctions de protection et de mesure électrique, par exemple pour déclencher un disjoncteur en cas de défaut électrique. Ces logiciels doivent donc respecter des contraintes de fonctionnement en temps réel lors de leur exécution. Si tel n'était pas le cas, la sécurité de fonctionnement de l'appareil serait compromise, ce qui n'est pas souhaitable.

De façon connue, certains appareils de coupure proposent des logiciels embarqués en temps réel dans lesquels plusieurs fonctionnalités peuvent être installées de façon modulaire. Mais cette modularité reste limitée et présente un aspect « monolithique », en ce sens que les différentes fonctionnalités sont assurées par des tâches qui sont groupées entre elles. En d'autres termes, ces fonctionnalités sont interdépendantes, depuis leur installation jusqu'à l'exécution. L'utilisateur ne peut pas installer ou désinstaller des fonctions individuelles, mais uniquement des ensembles figés de fonctionnalités prédéfinies. Ainsi, le fonctionnement d'un tel système reste compliqué pour l'utilisateur. Cette architecture pose également un problème lorsque le fabricant souhaite tester et certifier différentes fonctionnalités avant de les proposer aux utilisateurs. En effet, du fait que les tâches sont indissociables au sein d'un même ensemble, c'est tout cet ensemble de tâches qui doit être testé. Si le fabricant souhaite tester ou certifier toutes les combinaisons possibles de fonctionnalités en vue d'offrir un plus grand choix aux utilisateurs, alors le nombre d'ensembles devant être testés et certifiés augmente exponentiellement, de sorte qu'une telle tâche n'est pas faisable en pratique.

Il existe certes d'autres systèmes logiciels présentant une architecture modulaire, autorisant ainsi une utilisation plus flexible. Mais ils ne permettent pas de garantir un comportement en temps réel. Leur utilisation n'est donc pas souhaitable.

C'est à ces inconvénients qu'entend plus particulièrement remédier l'invention, en proposant un appareil de coupure d'un courant électrique comprenant un calculateur électronique embarqué, et un procédé de fonctionnement associé, dans lequel des logiciels embarqués présentent une conception modulaire facile et rapide à mettre en œuvre par les utilisateurs, sans nuire à la sécurité de fonctionnement de l'appareil.

A cet effet, l'invention concerne un procédé de gestion de modules logiciels embarqués pour un calculateur électronique embarqué d'un appareil électrique de coupure d'un courant électrique, ce procédé comportant des étapes :
a) d'acquisition, par un système de gestion de modules logiciels du calculateur électronique de l'appareil de coupure, d'un module logiciel comprenant un code exécutable et un contrat de service déclarant les ressources matérielles requises par le code exécutable lors de son exécution par le calculateur électronique ;
b) d'installation du module logiciel à l'intérieur d'un réceptacle hôte, par le système de gestion, ce réceptacle hôte appartenant à un ensemble de réceptacles hôtes destinés à former chacun un environnement d'exécution d'un module logiciel, chaque réceptacle comportant à cet effet un emplacement mémoire défini statiquement à l'intérieur d'une mémoire du calculateur électronique et étant associé à un sous-ensemble de ressources matérielles du calculateur électronique ;
c) d'exécution du module logiciel par le calculateur électronique ; en l'étape c) comporte, lors de l'exécution du module logiciel,
une étape consistant à vérifier, au moyen du système de gestion, si l'exécution du module logiciel respecte le contrat de service de ce module logiciel, l'exécution est autorisée à se poursuivre si le contrat de service est respectée et, si l'exécution du module logiciel est identifiée comme ne respectant pas le contrat de service, une étape de récupération est mise en place dans le but d'interrompre l'exécution du module logiciel par le calculateur électronique
et lors de l'étape c), l'exécution du code comporte l'exécution de plusieurs tâches en temps réel par une unité logique de calcul du calculateur électronique, chaque tâche étant associée à une
fréquence d'exécution prédéfinie, et l'exécution des tâches par l'unité logique de calcul est régulée par un premier ordonnanceur implémenté par le système de gestion puis par un deuxième ordonnanceur implémenté par un système d'exploitation en temps réel du calculateur électronique, le premier ordonnanceur autorisant sélectivement l'exécution des tâches en attente d'exécution en fonction de leur fréquence d'exécution et leur affectant un niveau de priorité d'exécution pour le deuxième ordonnanceur qui dépend de la fréquence d'exécution définie pour cette tâche.

Ainsi, l'invention permet de concilier à la fois l'aspect modulaire du logiciel embarqué et le respect des contraintes d'exécution en temps réel de ce logiciel.

Comme expliqué précédemment, la structure modulaire des modules logiciels est permise en partie grâce aux réceptacles. Cette structure modulaire est également permise par le contrat de service, ainsi que par les mécanismes permettant de vérifier si le contrat de service est respecté. Le contrat de service permet également d'assurer le fonctionnement en temps réel des modules logiciels.

Comme les modules logiciels présentent une structure modulaire, ils peuvent être installés ou désinstallés dynamiquement. La gestion logicielle de l'appareil est facilitée pour les utilisateurs. Cette structure modulaire offre également plus possibilités pour faire évoluer le fonctionnement de l'appareil au cours du temps. De plus, en préservant le fonctionnement en temps réel des logiciels embarqués, on évite de nuire à la sécurité de fonctionnement de l'appareil.

Selon des aspects avantageux mais non obligatoires de l'invention, un tel procédé peut incorporer une ou plusieurs des caractéristiques suivantes, prises isolément ou suivant toute combinaison techniquement admissible :
- Le procédé comporte, avant l'étape b), une étape préalable de vérification du contrat de service du module logiciel, l'installation du module logiciel étant refusée si les ressources matérielles requises par le contrat de service ne sont pas compatibles avec les ressources matérielles offertes par les réceptacles disponibles.

- Parallèlement à l'étape c), au moins un deuxième module logiciel distinct installé dans un autre réceptacle distinct est également en cours d'exécution, une deuxième étape consistant à vérifier si l'exécution de ce deuxième module logiciel respecte le contrat de service de ce deuxième module logiciel étant également mise en œuvre.
- Un premier groupe de tâches regroupe des tâches associées à une première fréquence d'exécution prédéfinie, un deuxième groupe de tâches regroupe des tâches associées à une deuxième fréquence d'exécution prédéfinie inférieure à la première fréquence d'exécution et lors de l'exécution du module logiciel, l'exécution des tâches appartenant au premier groupe est déclenchée par l'ordonnanceur lors de chaque réception d'un signal de cadencement périodique et l'exécution des tâches appartenant au deuxième groupe est déclenchée périodiquement par le premier ordonnanceur, les tâches appartenant au deuxième groupe présentant une priorité plus basse que les tâches appartenant au premier groupe.
- L'appareil de coupure est connecté à une installation électrique pour interrompre un courant électrique alternatif au sein de cette installation électrique, les fréquences d'exécution étant choisies en fonction de la fréquence du courant électrique alternatif.
- La stratégie de récupération mise en œuvre lors de l'étape de récupération en cas de violation du contrat de service d'un module logiciel comporte l'arrêt de l'exécution du module logiciel.
- La stratégie de récupération mise en œuvre lors de l'étape de récupération en cas de violation du contrat de service d'un module logiciel est choisie en fonction d'une valeur de criticité du code exécutable déclarée dans le contrat de service de ce module logiciel.

Selon un autre aspect, l'invention concerne un appareil de coupure d'un courant électrique comprenant un calculateur électronique embarqué apte à piloter le fonctionnement de l'appareil de coupure et destiné à recevoir des modules logiciels embarqués,
le calculateur électronique comportant un ensemble de réceptacles hôtes destinés à former chacun un environnement d'exécution d'un module logiciel, chaque réceptacle comportant à cet effet un emplacement mémoire défini statiquement à l'intérieur d'une mémoire du calculateur électronique et étant associé à un sous-ensemble de ressources matérielles du calculateur électronique,
ce calculateur électronique implémentant en outre un système de gestion programmé pour mettre en œuvre des étapes :
a) d'acquisition d'un module logiciel comprenant un code exécutable et un contrat de service déclarant les ressources matérielles requises par le code exécutable lors de son exécution par le calculateur électronique ;
b) d'installation du module logiciel à l'intérieur d'un des réceptacles ;
c) d'exécution du module logiciel par le calculateur électronique, l'étape c) comportant, lors de l'exécution du module logiciel, une étape consistant à vérifier si l'exécution du module logiciel respecte le contrat de service de ce module logiciel, l'exécution est autorisée à se poursuivre si le contrat de service est respectée et, si l'exécution du module logiciel est identifiée comme ne respectant pas le contrat de service, une étape de récupération est mise en place dans le but d'interrompre l'exécution du module logiciel par le calculateur électronique
et lors de l'étape c), l'exécution du code comporte l'exécution de plusieurs tâches en temps réel par une unité logique de calcul du calculateur électronique, chaque tâche étant associée à une fréquence d'exécution prédéfinie, et l'exécution des tâches par l'unité logique de calcul est régulée par un premier ordonnanceur implémenté par le système de gestion puis par un deuxième ordonnanceur implémenté par un système d'exploitation en temps réel du calculateur électronique, le premier ordonnanceur autorisant sélectivement l'exécution des tâches en attente d'exécution en fonction de leur fréquence d'exécution et leur affectant un niveau de priorité d'exécution pour le deuxième ordonnanceur qui dépend de la fréquence d'exécution définie pour cette tâche.

Selon des aspects avantageux mais non obligatoires de l'invention, un tel appareil de coupure peut comporter la caractéristique suivante : le calculateur électronique est en outre programmé pour mettre en œuvre, avant l'étape b), une étape préalable de vérification du contrat de service du module logiciel, l'installation du module logiciel étant refusée si les ressources matérielles requises par le contrat de service ne sont pas compatibles avec les ressources matérielles offertes par les réceptacles disponibles.

L'invention sera mieux comprise et d'autres avantages de celle-ci apparaîtront plus clairement à la lumière de la description qui va suivre, d'un mode de réalisation d'un procédé de gestion de modules logiciels au sein d'appareil de coupure d'un courant électrique, donnée uniquement à titre d'exemple et faite en référence aux dessins annexés, dans lesquels :
- la figure 1 est une représentation schématique d'un appareil de coupure équipé d'un calculateur électronique embarqué conforme à l'invention ;
- la figure 2 est un schéma synoptique d'un système de gestion de modules logiciels implémenté par le calculateur électronique de la figure 1 ;
- la figure 3 est un schéma simplifié d'un module logiciel et d'un réceptacle pour recevoir ce module logiciel et implémenté par le système de gestion de la figure 2 ;
- la figure 4 est un schéma synoptique d'une machine d'état associée à un module logiciel de la figure 3 ;
- les figures 5 et 6 sont des ordinogrammes illustrant un procédé de fonctionnement d'un ordonnanceur du système de gestion de la figure 2 ;
- la figure 7 est un ordinogramme d'un procédé de fonctionnement du système de la figure 2 ;
- la figure 8 est un ordinogramme d'un procédé de vérification d'un contrat de service associé à un module logiciel mis en œuvre lors du procédé de la figure 7 lors de l'installation d'un module logiciel ;
- la figure 9 est un ordinogramme d'un procédé de vérification d'un contrat de service associé à un module logiciel mis en œuvre lors du procédé de la figure 7 lors de l'exécution d'un module logiciel ;
- les figures 10 à 13 sont des ordinogrammes d'un procédé de mesure du temps d'exécution d'une tâche implémentée par un module logiciel lors de son exécution à l'intérieur du système 2 ;
- la figure 14 est un ordinogramme d'un procédé de mise en œuvre d'une stratégie de récupération d'un module logiciel suite à une violation du contrat de service de ce logiciel lors de son exécution à l'intérieur du système 2.

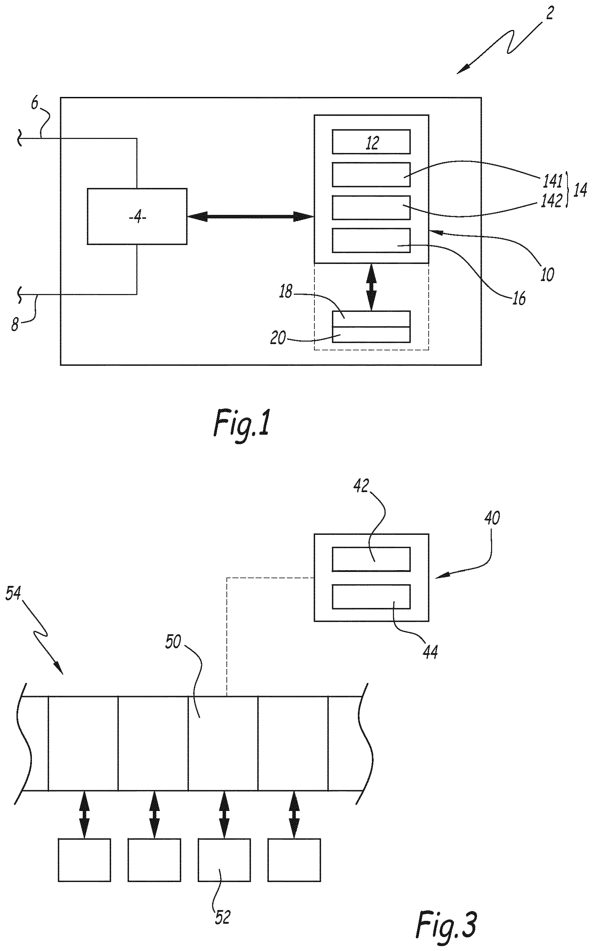

La figure 1 représente un appareil de coupure 2 d'un courant électrique, comportant un bloc de coupure 4 et des terminaux 6 et 8 d'entrée/sortie d'un courant électrique. L'appareil 2 est destiné à être raccordé électriquement, par l'intermédiaire des terminaux 6 et 8, à une installation électrique, telle qu'un circuit de distribution électrique.

Le bloc de coupure 4 est adapté pour interrompre, de façon réversible, la circulation d'un courant électrique entre les terminaux 6 et 8, par exemple au moyen de contacts électriques séparables dont le déplacement est commandé par un actionneur commandable.

Les terminaux 6 et 8 sont ici illustrés de façon schématique. Leur nombre exact peut varier, notamment selon que le courant électrique est un courant monophasé ou polyphasé. Par exemple, l'appareil 2 est un appareil monopolaire ou un appareil tétrapolaire.

Dans cet exemple, l'appareil 2 est un disjoncteur à basse tension, adapté pour fonctionner avec un courant électrique continu ou alternatif. En variante, il peut s'agir d'un disjoncteur à haute tension, ou d'un contacteur, ou d'un interrupteur, ou de tout autre appareil de coupure équivalent.

L'appareil 2 comporte également un calculateur électronique 10 embarqué, qui est notamment adapté pour piloter le fonctionnement de l'appareil 2, ici au moyen de logiciels embarqués.

Par exemple, le calculateur 10 est adapté pour commander le bloc de coupure 4, en agissant sur l'actionneur commandable précédemment mentionné.

Le calculateur 10 comprend une unité logique de calcul 12, une mémoire informatique 14 et une interface utilisateur 16, connectées entre elles par un bus de données interne, non illustré.

L'unité logique 12 est ici un microprocesseur ou un microcontrôleur programmable.

Dans cet exemple, la mémoire 14 comprend une mémoire non volatile 141 et une mémoire de travail 142. Par exemple, la mémoire 141 comprend un module de mémoire non volatile, de type Flash ou toute autre technologie équivalente. La mémoire de travail 142 est ici de type RAM pour « Random Access Memory » en langue anglaise.

L'interface utilisateur 16 est adaptée pour permettre à un utilisateur d'interagir avec le calculateur 10 et, notamment, d'ajouter et de supprimer des modules logiciels.

Par exemple, l'interface 16 comprend un écran d'affichage commandable, ici de type à cristaux liquides, ainsi que des moyens de saisie de données, tels que des boutons ou un écran tactile.

L'interface 16 peut également comporter des moyens de connexion de données permettant d'établir une liaison de données filaire ou sans fil entre le calculateur 10 et un équipement informatique externe, pour assurer le téléchargement de modules logiciels. Par exemple, l'interface 16 comprend un connecteur filaire de type USB ou un port série. L'interface 16 peut également comporter une interface radio de type NFC pour « near field communication » ou de type UNB, pour « ultra narrow band » en langue anglaise, ou encore toute technologie appropriée.

L'interface 16 peut en outre comporter un lecteur apte à lire le contenu d'un support d'enregistrement amovible, tel qu'une carte mémoire ou un disque optique, là encore pour assurer le téléchargement de modules logiciels.

Le calculateur 10 est ici logé avec le bloc 4 à l'intérieur d'un même boîtier de l'appareil 2. L'interface 16 est, de préférence, positionnée de façon à être accessible par un utilisateur depuis l'extérieur de ce boîtier.

La mémoire 14 stocke des instructions logicielles exécutables pour assurer le fonctionnement du calculateur 10 et de l'appareil 2 lorsque ces instructions sont exécutées par l'unité logique 12. Ces instructions prennent par exemple la forme d'un ou plusieurs logiciels embarqués.

Le calculateur 10 est ainsi adapté pour exécuter, lors de son fonctionnement, grâce à des instructions logicielles exécutables, un système d'exploitation 18 en temps réel et un système de gestion 20 de modules logiciels. Plus précisément, dans cet exemple, le système de gestion 20 est exécuté au sein du système d'exploitation 18.

De façon connue, le système d'exploitation 18 a pour fonction de gérer l'accès de programmes informatiques aux ressources matérielles du calculateur 10 tout en assurant l'exécution de ces programmes informatiques en temps réel.

Au sens de la présente description, un système informatique est dit être « en temps réel » lorsqu'il comporte des moyens permettant de garantir l'exécution d'une tâche avec un temps d'exécution inférieur à une durée prédéfinie.

Le système d'exploitation 18 comporte ici une fonction de séparation spatiale.

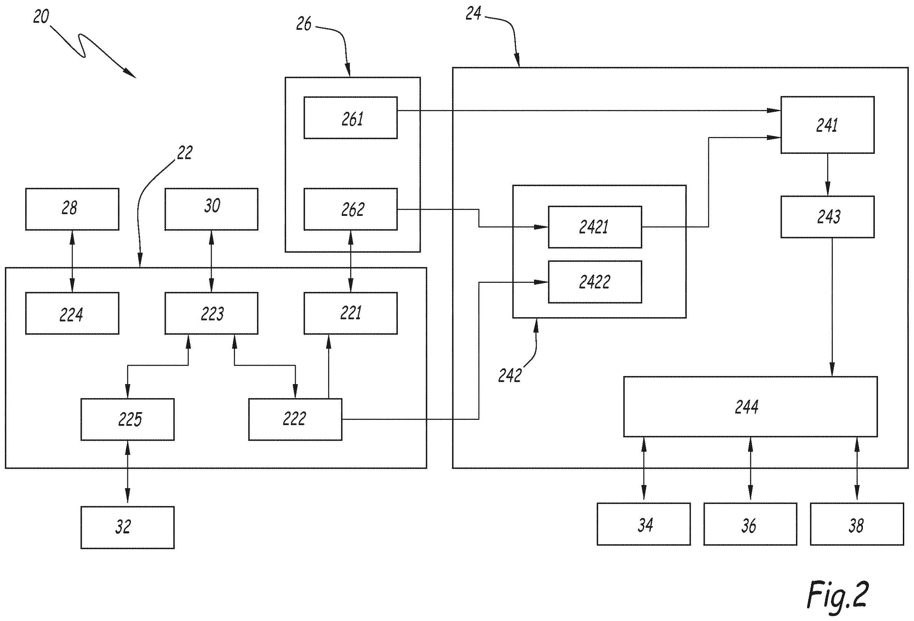

Les figures 2 à 4 représentent un exemple du système de gestion 20.

Le système de gestion 20 a pour fonction de permettre l'exécution d'un ou plusieurs modules logiciels en temps réel par le calculateur 10, tout en permettant une installation et une désinstallation de ces modules logiciels de façon dynamique, comme expliqué dans ce qui suit. Ainsi, ces modules logiciels peuvent être chargés ou déchargés « à chaud » et sont dits être « enfichables ».

Dans ce qui suit, les modules logiciels portent la référence « 40 ». Dans un souci de simplicité, seul un module 40 est décrit, de façon générique, bien qu'en pratique plusieurs modules 40 différents peuvent être utilisés simultanément dans le système 20.

Par exemple, chaque module logiciel 40 est un fichier informatique apte à être enregistré dans la mémoire 14.

Chaque module logiciel 40 comprend ici des instructions exécutables 42, ou code exécutable, destinées à assurer la mise en œuvre d'une fonction prédéfinie de l'appareil 2 lorsqu'elles sont exécutées par l'unité logique 12. En particulier, ces fonctions sont ici basées à partir d'une ou plusieurs tâches ou routines élémentaires prédéfinies.

Chaque module logiciel 40 comprend également un contrat de service 44, qui décrit le comportement dynamique du module 40 lors de son exécution et, notamment, définit les ressources requises par le module 40 lors de l'exécution du code exécutable 42. De préférence, ces ressources requises correspondent à une valeur maximale de ressources requises dans un cas extrême, aussi dit « worst case scénario » en langue anglaise.

En particulier, le contrat de service 44 contient une déclaration du niveau d'utilisation maximal de ressources de calcul de l'unité logique 12. Cette information permet de déterminer le temps maximal d'exécution requis pour l'exécution des tâches correspondantes par l'unité 12.

Le contrat de service 44 contient également des déclarations qui indiquent les besoins du module 40 relatifs à d'autres types de ressources matérielles du calculateur 10 et/ou du système 20 et/ou de l'appareil 2, notamment lorsqu'il s'agit de ressources matérielles qui sont limitées au sein de l'appareil 2 et qui doivent faire l'objet d'une supervision pour éviter des conflits entre les différents modules 40.

Par exemple, le contrat de service 44 contient des déclarations relatives à la taille maximale de mémoire vive utilisée par le module, ou encore le nombre maximal de paramètres de configuration gérés par le module 40.

Avantageusement, le contrat de service 44 contient en outre une déclaration relative au niveau de criticité des fonctions implémentées par le module 40.

Par exemple, si le module 40 implémente une fonction relative à la sécurité de l'appareil 2, notamment relative à la protection électrique, alors son niveau de criticité est supérieur à celui d'un module 40 qui implémente une fonction de moindre importance, telle qu'une fonction de mesure.

De préférence, le contrat de service 44 est enregistré sous la forme d'un fichier informatique dans un format de sérialisation de données lisible par machine.

A titre d'exemple illustratif, le contrat de service 44 comporte ici un fichier informatique au format JSON, pour « JavaScript Object Notation ». D'autres formats sont cependant possibles, notamment le format XML, pour « Extended Markup Language ». Les déclarations sont ici enregistrées dans le contrat de service 44 sous la forme de variables informatiques, telles que des valeurs numériques, des valeurs booléennes et/ou des chaînes de caractères alphanumériques. En variante, le contrat de service 44 peut également être sous une forme binaire ou présenter un encodage spécifique.

Par exemple, le contrat de service 44 est généré lors de l'écriture et du développement du code exécutable 42.

Au sein du système 20, la modularité du logiciel embarqué est assurée grâce à un ensemble de réceptacles 50 hôtes, chacun destinés à recevoir un des modules logiciels 40. Ces réceptacles 50 sont également nommés « emplacement », ou « slot » en langue anglaise.

Les réceptacles 50 sont des structures de données adaptées pour recevoir un module logiciel 40 et pour former un environnement d'exécution de ce module logiciel 40.

Par exemple, chaque réceptacle 50 comporte un emplacement mémoire, aussi dit container, défini statiquement au sein d'une zone 54 de la mémoire 14. Plus précisément, chaque réceptacle 50 définit une partition mémoire prédéfinie avec une taille de mémoire prédéfinie réservée à l'intérieur de la zone 54.

Chaque réceptacle 50 définit en outre un ensemble de tâches prédéfinies, un ensemble d'objets logiciels permettant d'interagir avec d'autres systèmes logiciels mis en œ uvre par le système d'exploitation 18 et une bibliothèque de fonctions utilisables par le module logiciel 40 hébergé dans ce réceptacle 50.

Ainsi, chaque réceptacle 50 est associé à un sous-ensemble 52 de ressources matérielles du calculateur 10. Par exemple, les ressources d'un sous-ensemble 52 sont uniquement accessibles par le module 40 qui est hébergé dans ce réceptacle 50.

Les réceptacles 50 permettent donc de mettre en place un partitionnement spatial pour isoler les modules logiciels 40 les uns des autres. Ce partitionnement est ici réalisé par le système de gestion 20, grâce à des mécanismes sous-jacents fournis par le système d'exploitation 18, en particulier grâce à la fonction de séparation spatiale. Les modules 40 peuvent donc être installés ou désinstallés à chaud, sans impacter le fonctionnement des autres modules 40.

La nature précise de ces mécanismes de partitionnement dépend du type de système d'exploitation 18 utilisé ainsi que l'architecture de l'unité 12. Ici, il s'agit de mécanismes de type « partitioning » en langue anglaise, fournis par le système d'exploitation 18 en temps réel. Par exemple, en variante, le mécanisme de partitionnement est basé sur une technique de d'adresse virtuelle connue sous le nom de « Virtual Address Space » en langue anglaise.

Ainsi, dans le système 20, un module 40 ne peut pas accéder aux données ou au code appartenant aux autres modules 40 ou à d'autres logiciels exécutés sur le calculateur 10. Un module 40 ne peut pas utiliser plus de ressources mémoire que celles qui lui sont statiquement allouées au sein du réceptacle 50. Les réceptacles 50 participent donc à l'aspect modulaire du système 20.

Chaque réceptacle 50 peut présenter plusieurs états distincts, et notamment, un état dans lequel un module 40 est hébergé dans le réceptacle 50, et un autre état dans lequel il n'héberge aucun module 40.

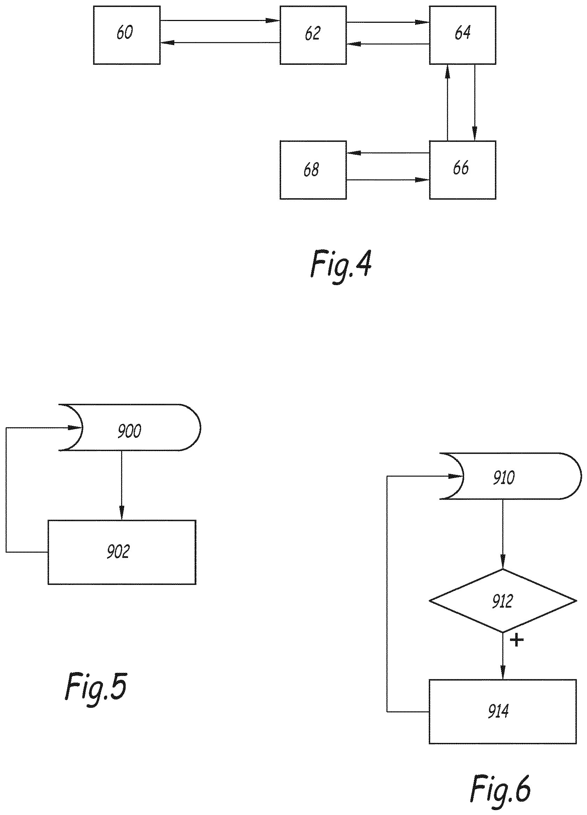

Dans cet exemple, comme illustré à la figure 4, chaque réceptacle 50 peut présenter cinq états différents. La référence « 60 » désigne un état dans lequel le réceptacle 50 est vide. La référence « 62 » désigne un état « réservé », dans lequel aucun module 40 n'est hébergé, mais où le réceptacle 50 est réservé en vue de l'ajout futur d'un nouveau module 40. Il n'est donc pas disponible pour accueillir d'autres modules 40 que celui pour lequel il est réservé. La référence « 64 » désigne un état « chargé » dans lequel un module 40 est hébergé dans ce réceptacle 50 mais n'est pas démarré, par exemple parce que ce module 40 a été arrêté ou parce qu'il n'a pas pu obtenir de licence valable, ou que son initialisation a échoué. La référence « 66 » désigne un état « initialisé » dans lequel le module 40 est hébergé et a été démarré, mais n'est pas en cours d'exécution. Par exemple, le module 40 est dans un état suspendu, ou son exécution a été interrompue suite à un dysfonctionnement. Enfin, la référence « 68 » désigne un état dans lequel le module 40 est en cours d'exécution.

Les transitions entre ces états du réceptacle 50 sont ici assurées par des fonctions prédéfinies. Dans cet exemple, la transition entre les états 66 et 68 se fait en démarrant ou, alternativement, en arrêtant l'exécution du module 40. La transition entre les états 66 et 64 est réalisée en donnant un ordre d'éteindre le processus mis en œuvre par le module 40 ou, inversement, en octroyant une licence et en initialisant ce processus. La transition entre les états 62 et 64 est réalisant en chargeant ou, inversement, en déchargeant le module 40, par exemple depuis une zone de la mémoire 14. La transition entre les états 60 et 62 est réalisée en validant et acceptant le contrat de service du module 40 et en allouant les ressources matérielles du réceptacle 50 pour l'exécution de ce module 40. Inversement, la transition entre les états 62 et 60 est réalisée en libérant les ressources du réceptacle 50 et en rendant le réceptacle 50 à nouveau disponible pour un autre module. La transition depuis les autres états vers l'état 62 peut aussi se faire en envoyant un ordre de réinitialisation du réceptacle 50.

Le fonctionnement du système 20 est assuré grâce à un certain nombre de composants logiciels. Comme illustré à la figure 2, le système 20 comporte notamment un composant 22 de supervision des modules 40 et un ordonnanceur 26. La référence « 24 » désigne ici les composants logiciels mis en œuvre lors du fonctionnement d'un module 40.

Par exemple, l'ordonnanceur 26 est implémenté en tant que tâche exécutée par le système d'exploitation 18. Cette exécution est par exemple réalisée de façon périodique avec une fréquence d'exécution fixe.

Le système 20 comprend également des composants logiciels assurant des fonctions auxiliaires.

A titre d'exemple, le système 20 comprend ici plusieurs composants logiciels auxiliaires, parmi lesquels un composant 28 de gestion de licences, un composant 30 de vérification et de gestion de signatures numériques, un composant 32 assurant l'accès à un serveur de fichiers, un composant 34 de gestion d'événements et d'alarmes, un composant 36 assurant l'accès à des périphériques matériels du calculateur 10 tels que des capteurs de mesure intégrés à l'appareil 2, et un composant 38 de gestion de paramètres de configuration. En variante, certains de ces composants auxiliaires peuvent être omis.

Le composant 22 est notamment programmé pour assurer le chargement des modules 40 dans les réceptacles 50 et pour commander l'exécution du code 42 correspondant au travers de l'ordonnanceur 26, dont le fonctionnement est décrit dans ce qui suit. Par exemple, le composant 22 est programmé pour acquérir les modules 40, depuis l'interface 16 ou depuis le système de fichiers 32, puis pour ajouter le code correspondant dans la mémoire 14.

Dans cet exemple, le composant 22 comporte :
- une interface 221 connectée à l'ordonnanceur 26 et capable de demander à l'ordonnanceur 26 le démarrage ou l'arrêt de l'exécution du code 42 d'un module 40 installé dans un réceptacle 50 ;
- une interface 222 de gestion des réceptacles 50, notamment capable d'assurer les fonctions de chargement et déchargement des modules 40, d'enregistrement et de déréférencement des modules 40, et de mise en marche et d'arrêt de l'exécution d'un réceptacle 50 ;
- une interface 223 notamment apte à gérer l'acquisition et l'accès au contrat de service 44 et à gérer l'acquisition des modules 40 depuis le serveur de fichier 32 ainsi que la vérification de leur signature numérique, le cas échéant.
- une interface 224 d'accès au gestionnaire de licences 28 ;
- une interface 225 d'accès au serveur de fichiers 32.

L'ordonnanceur 26 comprend un composant 261 de gestion de l'ordonnancement des tâches ainsi qu'un composant 262 de suivi et de contrôle des tâches en temps réel devant être exécutées.

Le composant 24 comporte ici un composant 241 de gestion des tâches permettant la synchronisation des tâches en temps réel, un composant 243 de gestion de mémoire adapté pour gérer les accès du module 40 à la mémoire 14, une interface 244 d'accès aux composants auxiliaires 34, 36 et 38. Le composant 24 comporte également un gestionnaire 242 de tâches, qui inclut une interface 2421 d'accès à l'ordonnanceur 26 et une interface 2422 de gestion du réceptacle 50.

Les interfaces décrites ci-dessus sont par exemples assurées grâce à un ensemble de fonctions d'interface de programmation applicative, aussi notées « API ». Les connexions entre interfaces et/ou composants logiciels décrits ci-dessus sont par exemple assurées grâce à des moyens logiciels de communication interprocessus.

Les figures 5 et 6 illustrent un aspect du fonctionnement de l'ordonnanceur 26. L'ordonnanceur 26 est ici distinct de l'ordonnanceur propre au système d'exploitation 18.

L'ordonnanceur 26 a pour fonction de déclencher périodiquement l'exécution des tâches mises en œuvre par les modules 40 lorsque ces modules sont en fonctionnement. Pour ce faire, l'ordonnanceur 26 utilise un signal de cadencement, tel qu'un signal d'horloge. Ce signal de cadencement est ici fourni par une horloge propre au système 20. En variante, ce signal peut être acquis depuis l'extérieur du système 20.

Dans ce qui suit, sauf précision contraire, il est entendu que les tâches mises en œuvre par les modules 40 sont des tâches en temps réel (« real-time tasks » en langue anglaise).

Dans cet exemple, l'ordonnanceur 26 est programmé pour traiter les tâches en attente d'exécution de façon différente en fonction de leur cadencement d'exécution.

Par exemple, chaque tâche est associée à une fréquence d'exécution prédéfinie, aussi nommée cadence d'exécution. L'ordonnanceur 26 est programmé pour autoriser sélectivement l'exécution des tâches en attente d'exécution en fonction de leur fréquence d'exécution et pour leur affecter un niveau de priorité d'exécution qui dépend de la fréquence d'exécution définie pour cette tâche. L'ordonnanceur du système d'exploitation 18 organise ensuite l'exécution desdites tâches selon ce niveau de priorité d'exécution.

Par exemple, on définit un premier groupe de tâches qui rassemble des tâches destinées à être exécutées avec une première fréquence d'exécution. La période d'exécution correspondante à cette fréquence est ici nommée période de base et est notée σ₁.

De façon analogue, on définit un ou plusieurs autres groupes de tâches, dits groupes secondaires, chacun rassemblant des tâches dont l'exécution est destinée à être lancée avec une fréquence d'exécution respective différente de la première fréquence. Les valeurs respectives de périodicité d'exécution de ces groupes secondaires sont ici notées de façon générique par la référence σₙ, où « n » désigne un nombre entier supérieur ou égal à 2.

Par exemple, les tâches appartenant au n-ième groupe secondaire, ou groupe d'ordre n, sont destinées à être exécutées avec une fréquence inférieure à la fréquence d'exécution des tâches du groupe d'ordre n-1. Ainsi, la période σₙ est strictement supérieure à la période σₙ₋₁.

Dans cet exemple, à titre d'illustration, on définit un premier groupe associé à une première période σ₁ égale à 10ms, ainsi que quatre groupes secondaires, de périodes d'exécution respectives notées σ₂, σ₃, σ₄ et σ₅ et respectivement égales à 20ms, 100ms, 200ms et 1 seconde.

En variante, le nombre de groupes secondaires, ainsi que les valeurs de période qui leur sont associées, peuvent être différents de ceux décrits, et la description de l'ordonnanceur 26 et de son fonctionnement faite en référence aux modes de réalisation de ces figures 5 et 6 s'applique de façon analogue à ces autres cas.

Par exemple, un signal de cadencement spécifique est généré pour chacun des groupes, de façon à faciliter la synchronisation de l'ordonnanceur 26. Lorsque les périodes secondaires σₙ sont des multiples de la période de base σ₁, des signaux de cadencement secondaires associés aux périodes secondaires σₙ peuvent être générés à partir du signal de cadencement associé à la période de base σ₁.

De façon particulièrement avantageuse, les valeurs des fréquences d'exécution, et donc les valeurs de la période de base et/ou des périodes secondaires décrites ci-dessus, sont choisies en fonction de la fréquence du courant électrique qui circule dans les terminaux 6 et 8 de l'appareil 2 lorsque ce courant est un courant alternatif. Par exemple, l'appareil 2 est utilisé dans une installation électrique dont la fréquence d'oscillation du courant alternatif est égale à 50Hz. Alors, dans cet exemple, la période de base σ₁ égale à 10ms correspond à la moitié de la période d'oscillation du courant alternatif.

Avantageusement, la priorité d'exécution des tâches appartenant à un groupe associé à une fréquence d'exécution élevée est plus haute que la priorité d'exécution des tâches appartenant aux groupes associés à une fréquence d'exécution moins élevée. Par exemple, les tâches du groupe d'ordre n ont une priorité d'exécution plus basse que les tâches du groupe d'ordre n-1. Les tâches du groupe principal ont une priorité d'exécution plus élevée que celle des tâches appartenant au(x) groupe(s) secondaire(s).

En pratique, cette priorité est ici affectée à chacune des tâches par l'ordonnanceur 26. Cette priorité définit la priorité avec laquelle les tâches seront traitées par l'ordonnanceur du système d'exploitation 18.

En d'autres termes, l'ordonnanceur 26 affecte auxdites tâches un niveau de priorité d'exécution qui dépend de la fréquence d'exécution définie pour cette tâche, cette priorité étant ici d'autant plus haute que la fréquence d'exécution est élevée.

Comme illustré à la figure 5, l'ordonnanceur 26 traite en priorité les tâches appartenant au premier groupe.

Ainsi, lors d'une étape 900, l'ordonnanceur 26 attend la réception du signal de cadencement associé à la période de base σ₁. En effet, le signal de cadencement est de préférence réglé pour correspondre à la période σ₁. Dans cet exemple, le signal de cadencement est émis toutes les 10ms.

Une fois que ce premier signal de cadencement est reçu, alors, lors d'une étape 902, l'ordonnanceur 26 autorise l'exécution de toutes les tâches en temps réel du premier groupe qui sont en attente d'exécution.

Le procédé retourne alors à l'étape 900 et l'ordonnanceur 26 attend à nouveau la réception du signal de cadencement avant de pouvoir autoriser l'exécution des nouvelles tâches associées à ce premier groupe qui auraient été mises en attente d'exécution entre temps par le reste du système 20.

En pratique, à ce stade, le fait que l'ordonnanceur 26 autorise l'exécution de plusieurs tâches ne signifie pas nécessairement que ces tâches vont être immédiatement exécutées par l'unité 12, dans la mesure où l'accès à l'unité 12 dépend du comportement de l'ordonnanceur principal géré par le système d'exploitation 18. Néanmoins, comme le système d'exploitation 18 est un système en temps réel, alors il est garanti que l'exécution de ces tâches sera assurée dans un délai prédéfini. L'exécution en temps réel de ces tâches est donc garantie.

Au sens de la présente description, du fait des mécanismes de fonctionnement de l'ordonnanceur 26 et de l'ordonnanceur propre au système d'exploitation 18 décrits ci-dessus, le terme « exécution », lorsqu'il est appliqué au module 40 lui-même, n'implique pas nécessairement que les tâches ou processus définis par le code exécutable 42 de ce module 40 sont en cours d'exécution par l'unité logique 12. Par exemple, par « exécution du module 40 », on entend ici que le système 20 accepte de prendre en charge les tâches correspondantes en vue de leur exécution par l'unité 12, mais que l'instant précis où les tâches correspondantes sont réellement exécutées par l'unité 12 dépend in fine du fonctionnement, notamment, de l'ordonnanceur 26.

La figure 6 illustre un exemple de la façon dont l'ordonnanceur 26 traite les tâches associées à l'un des groupes secondaires, tel que le groupe d'ordre n.

Le procédé commence lors d'une étape initiale 910.

Au cours d'une étape 912, l'ordonnanceur 26 vérifie s'il peut autoriser l'exécution des tâches du groupe en question. Par exemple, l'ordonnanceur 26 attend le signal de cadencement correspondant à la période σₙ.

Si tel est le cas, alors, lors d'une étape 914, l'ordonnanceur 26 autorise l'exécution des tâches du groupe en question.

En pratique, à ce stade, plusieurs tâches appartenant à des groupes différents ont reçu l'autorisation d'exécution de la part de l'ordonnanceur 26. C'est l'ordonnanceur du système d'exploitation 18 qui se charge d'ordonner l'exécution de ces tâches sur l'unité 12, en fonction de leur priorité, tout en s'attachant à garantir l'exécution en temps réel de ces tâches.

Une fois que l'exécution de toutes les tâches du groupe est lancée, le procédé retourne à l'étape 910 en vue d'autoriser l'exécution des nouvelles tâches associées à ce groupe qui auraient été mises en attente d'exécution entre temps par le reste du système 20.

Les étapes 910 à 914 de ce procédé sont ainsi répétées en boucle, et mises en œ uvre pour chacun des groupes secondaires, par exemple de façon conjointe.

Avec la conception décrite ci-dessus, l'ordonnanceur 26 assure l'exécution des modules 40 suivant une approche séquentielle, ce qui permet d'avoir une plus grande maîtrise de l'exécution de ces tâches. Ainsi, il n'est pas nécessaire que les programmes implémentés par le code exécutable 42 des modules logiciels soient basés sur une approche évènementielle.

En pratique, du fait que les tâches du groupe d'ordre n-1 ont une priorité d'exécution plus haute que les tâches du groupe d'ordre n, l'ordonnanceur du système d'exploitation 18 garantit que les tâches du groupe d'ordre n ne seront pas exécutées tant que les tâches du groupe n-1 n'auront pas fini d'être exécutées.

Toutefois, de façon optionnelle, il est également possible d'attendre que les tâches du groupe d'ordre n-1 aient terminé leur exécution avant d'autoriser l'exécution des tâches du groupe d'ordre n.

Ainsi, le procédé ci-dessus est avantageusement modifié pour que, lors de l'étape 910, l'ordonnanceur 26 attende que l'unité 12 ait terminé d'exécuter toutes les tâches du groupe précédent avant de passer à l'étape 912. En d'autres termes, l'exécution des tâches appartenant au groupe d'ordre n n'est autorisée que lorsque l'exécution des tâches du groupe précédent est terminée.

Ainsi, lorsque le procédé est exécuté pour le n-ième groupe, l'ordonnanceur 26 attend que toutes les tâches du groupe d'ordre n-1, c'est-à-dire les tâches associées à la période σₙ₋₁, aient fini d'être exécutées. En particulier, lorsque le procédé est exécuté pour le groupe secondaire associé à la période σ₂, l'ordonnanceur 26 attend que toutes les tâches du premier groupe aient fini d'être exécutées.

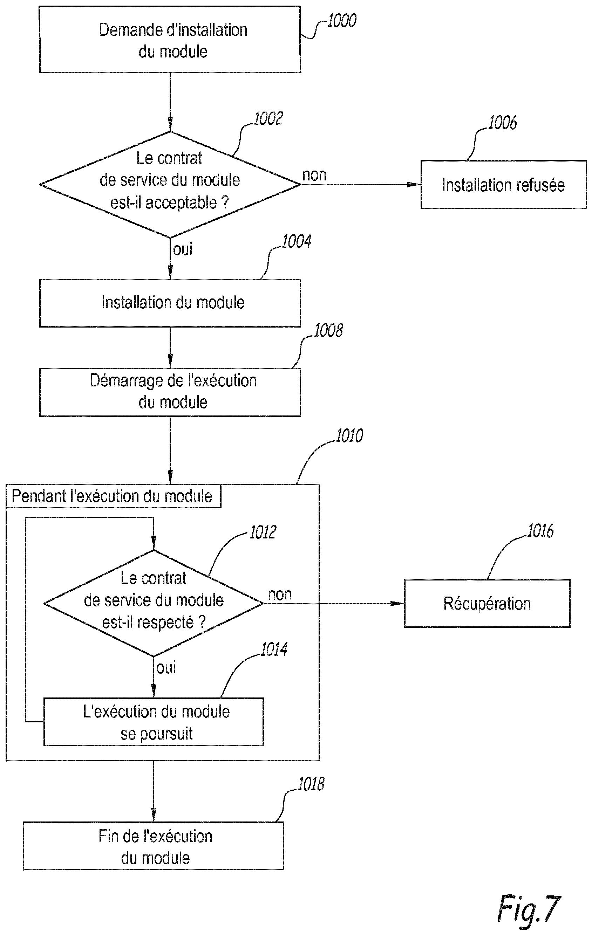

La figure 7 représente un exemple de procédé de fonctionnement du système 20, pour installer et exécuter un module 40.

Initialement, ce module 40 n'est hébergé par aucun des réceptacles 50.

D'abord, lors d'une étape 1000, une demande d'installation du module 40 est reçue par le système 20.

Par exemple, l'utilisateur envoie cette requête au système 20, par l'intermédiaire de l'interface 16. Le module 40 est téléchargé à l'intérieur de la mémoire par l'utilisateur, s'il n'est pas déjà présent à l'intérieur de celle-ci. Le système 20 peut alors interagir avec ce module 40, notamment pour acquérir le contrat de service 44 correspondant.

Ensuite, lors d'une étape 1002, le système 20 vérifie si le contrat de service 44 correspondant est acceptable, notamment au vu des ressources matérielles disponibles offertes par les réceptacles 50 qui sont encore à l'état libre.

Si le contrat de service 44 correspondant est considéré comme acceptable, par exemple parce qu'il y a au moins un réceptacle 50 libre dont les ressources 52 sont suffisantes pour accommoder les besoins du module 40 tels que déclarés dans son contrat de service 44, alors l'installation du module 40 est acceptée, puis est mise en œ uvre lors d'une étape subséquente 1004 d'installation du module 40 dans le réceptacle 50 libre.

Dans le cas contraire, l'installation du module 40 est refusée et le procédé se termine lors d'une étape 1006.

Une fois que le module 40 est correctement installé dans le réceptacle 50, son exécution est démarrée lors d'une étape 1008.

Lors d'une étape 1010, les instructions 42 du module 40 sont exécutées, par exemple de façon cyclique grâce à l'intervention de l'ordonnanceur.

Tout au long de cette étape 1010, pendant l'exécution du module 40, le système 20 s'assure, ici lors d'une étape 1012, que le module 40 respecte son contrat de service 44. En d'autres termes, le système 20 vérifie que le module 40 ne réclame ni ne consomme des ressources matérielles du calculateur 10 qui seraient supérieures aux besoins déclarés dans son contrat de service 44.

Si le module respecte le contrat de service, alors, lors d'une étape 1014, l'exécution du module 40 est autorisée à se poursuivre normalement. L'étape 1012 est alors à nouveau exécutée, par exemple périodiquement, tant que l'étape 1010 se poursuit.

Au contraire, si l'étape 1012 met en évidence que le contrat de service n'est pas respecté par le module 40, alors le système 20 met en place une stratégie de récupération lors d'une étape 1016.

L'étape 1016 permet de remettre le système 20 dans un état stable le plus rapidement possible, de sorte à ce que le fonctionnement des autres modules 40 ne soit pas impacté négativement par le comportement fautif du module 40 qui n'a pas respecté son contrat de service.

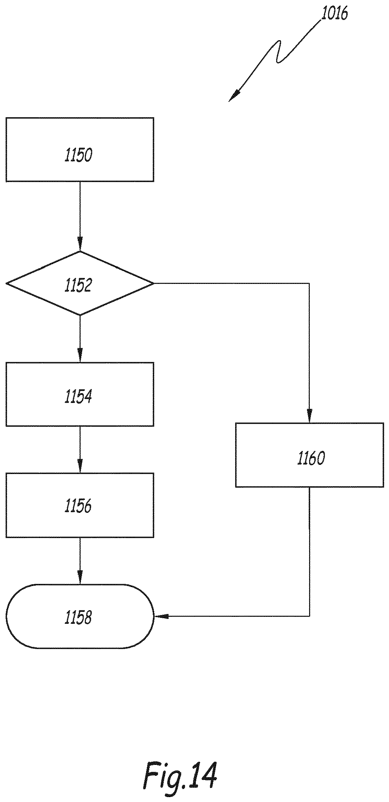

Comme expliqué en référence à la figure 14, cette stratégie de récupération peut s'accompagner d'un arrêt forcé du module 40 fautif.

Enfin, l'exécution du module 40 se termine normalement, par exemple parce que le module 40 a normalement terminé sa mission ou parce qu'il a reçu un ordre de s'arrêter. L'étape 1010 prend fin alors et le procédé se termine lors d'une étape 1018.

Les étapes 1000 à 1018 précédemment décrites sont ici mises en œuvre de façon parallèle pour chacun des modules 40 qui sont en cours d'exécution.

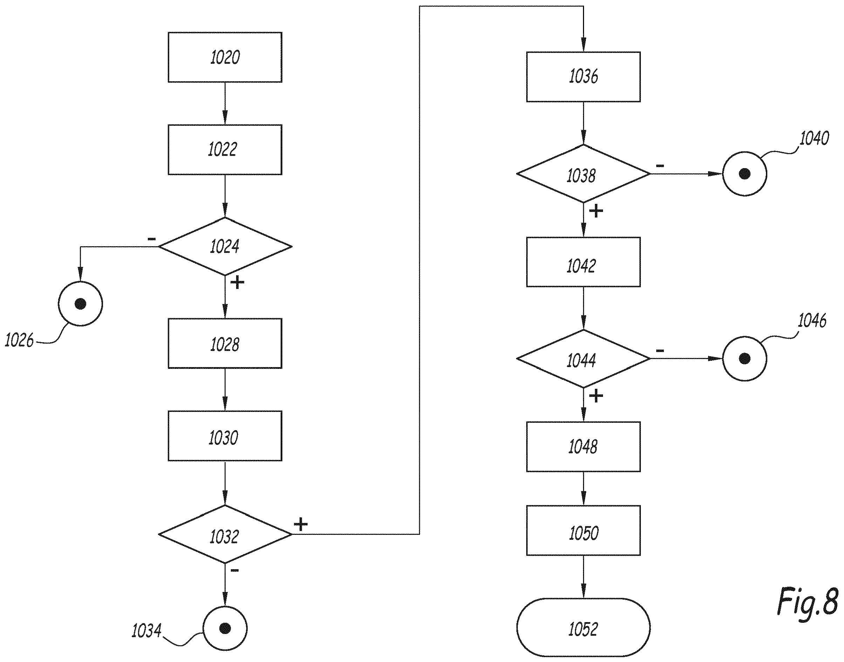

La figure 8 représente un exemple de mise en œuvre des étapes 1002, 1004 et 1008 pour vérifier le contrat de service 44 d'un module 40 lorsque son installation a été demandée.

Initialement, lors d'une étape 1020, le contenu du contrat de service 44 du module 40 est chargé par le composant 30 puis lu automatiquement par le gestionnaire 223 du composant 22.

Lors d'une étape 1022, le système 20 acquiert les déclarations enregistrées dans le contrat de service 44, et notamment celles relatives aux ressources de calcul requises par le module 40.

Ces déclarations sont comparées, lors d'une étape 1024, aux ressources disponibles offertes par les réceptacles 50 du système 20 qui sont déclarés comme disponibles, c'est-à-dire qui sont dans un état vide.

Si aucun réceptacle 50 adéquat ne peut être trouvé, par exemple parce qu'aucun des modules 50 libres ne peut offrir les ressources demandées par le contrat de service 44, alors le procédé de vérification se termine, lors d'une étape 1026, par le rejet du contrat de service. Par exemple, l'étape 1006 de refus d'installation du module 40 est alors mise en œuvre.

Au contraire, si un réceptacle 50 adéquat est disponible, alors, lors d'une étape 1028, ce réceptacle 50 est réservé. Par exemple, le gestionnaire 223 met automatiquement à jour une liste des réceptacles 50 disponibles au sein du système 20.

Ensuite, lors d'une étape 1030, le module 40 est chargé dans le réceptacle 50 correspondant. Avantageusement, la compatibilité du moule 40 peut être vérifiée à cette occasion.

Si le module 40 est identifié comme n'étant pas compatible, alors le procédé, lors d'une étape 1032, par le rejet du module. Par exemple, l'étape 1006 de refus d'installation du module 40 est alors mise en œuvre.

De façon optionnelle, si le module 40 est accepté, alors sa licence est automatiquement vérifiée lors d'une étape 1036, ici avec l'aide de l'interface 224 et du composant 28. Cela permet de vérifier le droit à l'usage du module 40.

Si, lors d'une étape 1038, la licence du module 40 est identifiée comme n'étant pas valide ou qu'elle est absente, alors le procédé se termine, lors d'une étape 1040, par le rejet du module 40. Par exemple, l'étape 1006 de refus d'installation du module 40 est là encore mise en œuvre.

Au contraire, si la licence est acceptée, alors le procédé se poursuit.

Ensuite, lors d'une étape 1042, le module 40 est automatiquement initialisé, c'est-à-dire mis dans un état permettant le démarrage ultérieur de l'exécution du programme associé au code 42. Par exemple, le gestionnaire 222 commande l'initialisation du réceptacle 50.

Si l'initialisation échoue pour une raison ou une autre, alors le procédé se termine, lors d'une étape 1046, par le rejet du module 40. Par exemple, l'étape 1006 de refus d'installation du module 40 est là encore mise en œuvre.

Si l'initialisation se déroule normalement, alors le réceptacle 50 se trouve dans l'état 66 à l'issue de l'étape 1044 et les tâches récurrentes du code 42 sont prêtes à être exécutées.

Dans cet exemple, le procédé comporte des étapes 1048 et 1050 de mise à jour d'information de suivi de l'état du système 20, par exemples assurées par le composant 22, pour tenir compte de ce changement d'état.

Le procédé se termine normalement lors d'une étape finale 1052.

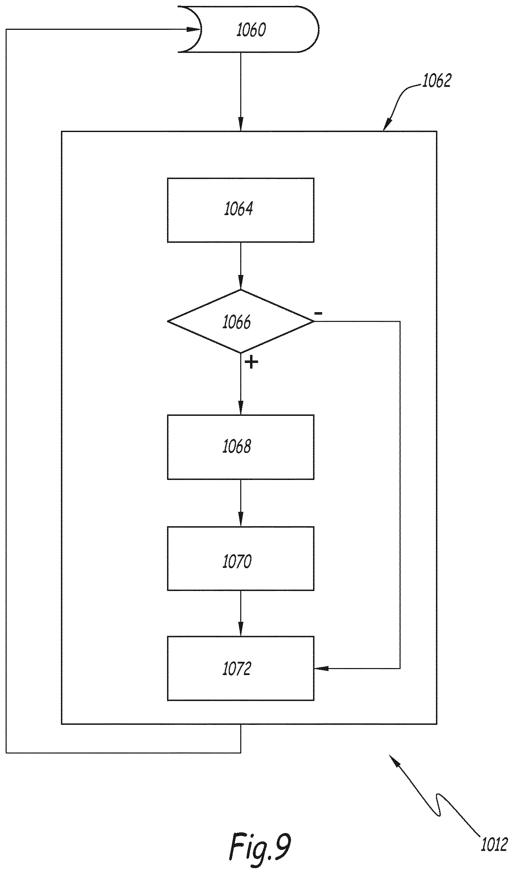

La figure 9 représente un exemple de mise en œuvre de l'étape 1012 de vérification du respect du contrat de service 44 d'un module 40 pendant l'exécution de ce module 40.

Cet exemple porte plus précisément sur la mise en œuvre de la vérification du respect du temps d'exécution d'une tâche appartenant à un des groupes de tâches, ici appartenant, à titre d'exemple illustratif, au groupe secondaire associé à la durée σ₂ égale à 20ms.

Lors d'une étape 1060, le système 20 attend la fin du cycle d'exécution associé aux tâches du groupe. La fin de ce cycle d'exécution est par exemple donnée par la réception d'un signal de cadencement correspondant.

Une fois que le système 20 a détecté la fin de ce cycle d'exécution, alors une étape 1062 est mise en œuvre pour chaque tâche du groupe dont l'exécution aurait dû se terminer.

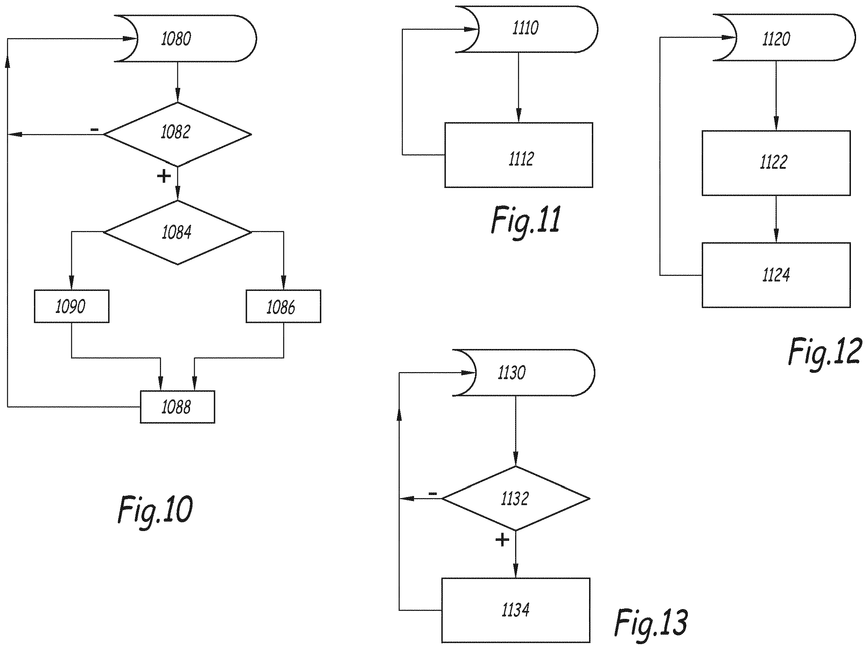

Cette étape 1062 comporte une sous-étape 1064, au cours de laquelle le système 20 détermine automatiquement le temps effectif d'exécution de cette tâche pendant le cycle d'exécution. Cette détermination est effectuée à partir d'informations provenant du noyau du système d'exploitation 18. Un exemple d'une telle détermination est décrit dans ce qui suit en référence aux figures 11 à 13.

Une fois que le temps effectif d'exécution est acquis, alors, lors d'une sous-étape 1066, ce temps effectif d'exécution est automatiquement comparé avec le temps maximal d'exécution déclaré dans le contrat de service 44.

Si le temps effectif d'exécution est supérieur au temps maximal d'exécution déclaré dans le contrat de service 44, alors le module 40 est considéré avoir violé son contrat de service 44. En conséquence, lors d'une étape 1068, une stratégie de récupération est mise en œuvre, pour empêcher le module 40 de violer à nouveau son contrat de service 40 de sorte à éviter de pénaliser le fonctionnement des autres modules 40. Par exemple, l'étape 1016 précédemment décrite est mise en œuvre.

Avantageusement, lors d'une étape 1070, la violation est enregistrée dans un fichier de journalisation.

Puis, lors d'une étape 1072, l'étape 1062 se termine, puis elle est réitérée pour traiter la tache suivante au sein du groupe de tâches.

Lorsqu'il ne reste plus aucune tâche exécutée dans le groupe correspondant, l'étape 1062 prend fin. Le procédé repart ensuite à l'étape 1060, pour attendre la fin du cycle suivant.

En revanche, si l'étape 1066 met en évidence que le module 40 a respecté son contrat de service 44 du point de vue des ressources de calcul lors de ce cycle de calcul, alors l'étape 1072 est directement mise en œuvre. Lorsqu'il ne reste plus aucune tâche exécutée dans le groupe correspondant, alors l'étape 1062 prend fin.

En variante, cette étape 1012 peut être réalisée différemment, notamment pour vérifier le respect du contrat de service relatif à d'autres ressources matérielles autres que le temps d'exécution. Par exemple, l'étape 1012 désigne de façon générique plusieurs procédés de vérification exécutés conjointement pour vérifier le respect de différents aspects du contrat de service d'un même module 40.

Les étapes 1080 à 1090 précédemment décrites sont ici mises en œuvre pour chacun des modules 40, indépendamment les uns des autres. On comprend notamment que plusieurs procédés analogues à celui de la figure 9 peuvent être mis en œuvre au sein du système 20 pour vérifier le respect du contrat de service par des tâches appartenant à des groupes différents

Les figures 10 à 13 représentent un exemple d'un procédé mis en œuvre pour mesurer le temps d'exécution d'une tâche exécutée par un module 40 chargé dans le système 20, par exemple au cours de l'étape 1064 précédemment décrite.

Les étapes mise en œuvre dans les procédés des figures 10 à 13 sont ici décrites séquentiellement, pour faciliter la compréhension. Toutefois, en pratique, les procédés correspondant aux ordinogrammes des figures 10 à 13 sont mis en œuvre en parallèle les uns par rapport aux autres.

Comme illustré à la figure 10, le procédé comporte un premier sous-ensemble d'étapes. Lors d'une étape 1080, le système surveille l'ordonnanceur du système d'exploitation 18 pour détecter une éventuelle commutation de contexte (« context switch » en langue anglaise) et attend jusqu'à ce qu'une telle commutation de contexte se produise.

Lorsqu'une telle commutation de contexte se produit, alors, lors d'une étape 1082, le système 20 vérifie si l'une des tâches mises en jeu dans cette commutation de contexte, soit en tant que tâche entrante ou en tant que tâche sortante, est une tâche en temps réel appartenant à l'un des groupes de tâches décrits ci-dessus. Si ce n'est pas le cas, alors le procédé retourne à l'étape 1080.

Si c'est le cas, au contraire, alors, lors d'une étape 1084, le système 20 détermine automatiquement si cette tâche en temps réel est entrante, c'est-à-dire qu'elle obtient un accès à l'unité logique 12, ou si elle est sortante, c'est-à-dire qu'elle cesse d'être exécutée par l'unité logique 12.

Si la tâche en temps réel est déterminée comme étant entrante, alors, lors d'une étape 1086, le système 20 enregistre automatiquement l'instant auquel la tâche a eu lieu l'entrée de la tâche, c'est-à-dire le moment auquel elle a eu l'accès à l'unité logique 12. Par exemple, cet instant est enregistré dans une structure de données dédiée au sein de la mémoire 14. Le procédé se termine pour cette tâche lors d'une étape 1088 puis retourne ensuite à l'étape 1080 pour être à nouveau mis en œuvre.

Si, au contraire, la tâche en temps réel est déterminée comme étant sortante, alors, lors d'une étape 1090, le système 20 calcule automatiquement le temps qui s'est écoulé depuis la dernière entrée. Ce temps est ici noté T1. Lors de cette étape 1090, le système 20 détermine si la tâche a été préemptée suite à une routine d'interruption (« Interrupt Service Routine » en langue anglaise). Si tel est le cas, le système récupère la durée Tᵢₛᵣ pendant laquelle cette tâche a été préemptée. Le calcul de cette durée Tᵢₛᵣ est décrit dans ce qui suit en référence à la figure 13. Une fois la durée Tᵢₛᵣ connue, le système 20 calcule la différence « T₁ - Tᵢₛᵣ » puis ajoute cette différence à la valeur de temps d'exécution de cette tâche. La valeur de temps d'exécution est par exemple stockée dans un accumulateur associé à l'unité logique 12, cet accumulateur étant accessible par le système 20.

En parallèle, comme illustré à la figure 11, le système 20 attend, lors d'une étape 1110, la réception d'un signal de synchronisation associé à la durée d'exécution seuil correspondant au groupe de tâches. Ensuite, une fois ce signal reçu, le système 20 réinitialise automatiquement l'accumulateur pour toutes les tâches du groupe. Les étapes 1110 et 1112 sont répétées en boucle.

Cette figure 11 décrit le procédé pour le n-ième groupe de tâches. En pratique, ces étapes 1110 et 1112 sont mises en œuvre séparément pour chacune des n familles de tâches définies pour le système 20.

Comme illustré à la figure 12, en parallèle, lors d'une étape 1120, le système 20 attend la réception d'une information comme quoi une condition d'exception associée à l'unité 12 est survenue. Cette information est par exemple un signal fourni par une routine d'interruption.

Ensuite, lors d'une étape 1122, le système 20 enregistre, par exemple au sein de la mémoire 14, une information d'horodatage sur la date de réception de cette condition d'exception ainsi que sur le fait qu'une telle condition d'exception est survenue.

En réponse, lors d'une étape 1124, l'ordonnanceur 26 ordonne à l'ordonnanceur du système d'exploitation 18 d'exécuter une tâche spécifique, notée T0. Cette tâche T0 correspond à une tâche vide ayant la priorité d'exécution la plus élevée. Par exemple, cette priorité est définie de façon statique de manière à être la plus élevée en toutes circonstances.

L'étape 1120 est ensuite à nouveau exécutée, pour attendre une future condition d'exception.

En parallèle, comme illustré à la figure 13, lors d'une étape 1130, le système 20 surveille les tâches gérées par l'ordonnanceur du système d'exploitation 18, notamment pour détecter les tâches qui sont exécutées par l'unité 12.

Dès que le système 20 détecte que l'ordonnanceur du système d'exploitation 18 déclenche l'exécution d'une tâche, alors, lors d'une étape 1132, le système 20 vérifie automatiquement si la tâche entrante est la tâche spécifique T0. Si tel est le cas, alors, lors d'une étape 1134, le système 20 calcule et enregistre le temps Tᵢₛᵣ, qui s'est écoulé depuis la dernière condition d'exception détectée. Ce calcul est par exemple effectué grâce à l'information d'horodatage enregistrée lors de l'étape 1122. Le procédé retourne alors à l'étape 1100.

Si, au contraire, la tâche entrante n'est pas identifiée comme étant la tâche spécifique T0, alors le procédé retourne à l'étape 1130.

Ainsi, la valeur de temps d'exécution contenue dans l'accumulateur correspond au temps d'exécution effectif de la tâche. Cette valeur est par exemple collectée par le système 20, avant l'étape 1112 de réinitialisation, afin de mettre en œuvre l'étape 1066 précitée.

Le procédé des figures 10 à 13 est avantageusement mis en œuvre lorsque le système 20 ne peut pas directement accéder au noyau du système d'exploitation 18. Il permet ainsi de disposer d'une information fiable sur le temps d'exécution des tâches par l'unité 12, à partir d'informations collectées depuis l'espace utilisateur du système d'exploitation 18.

La figure 14 représente un exemple de mise en œuvre de l'étape 1016 pour implémenter une stratégie de récupération lorsqu'un module 40 n'a pas respecté son contrat de service pendant son exécution. Cet exemple d'étape 1016 de récupération est décrit pour le cas où la violation du contrat de service porte sur le temps d'exécution.

D'abord, lors d'une étape 1150, toutes les tâches en cours d'exécution du module 40 sont interrompues et supprimées, par exemple en envoyant un signal d'arrêt de type « kill ».

Puis, lors d'une étape 1152, le nombre de tentatives de redémarrage du module 40 est comparé à un seuil maximum prédéfini.

Si le nombre de tentatives est inférieur au seuil maximum, alors, lors d'une étape 1154, une tentative de redémarrage du module 40 est effectuée. Par exemple, de nouvelles tâches correspondant aux tâches supprimées lors de l'étape 1150 sont créées et sont réinitialisées. Le compteur indiquant le nombre de tentatives de redémarrages est incrémenté d'une unité.

Puis, lors d'une étape 1156, les tâches ainsi réinitialisées sont prises en charge par l'ordonnanceur, permettant d'assurer leur exécution.

Le procédé se termine à l'étape 1158.

En revanche, si lors de l'étape 1152 le nombre de tentatives est supérieur au seuil maximum, alors, lors d'une étape 1160, l'exécution du module 40 est arrêtée.

Cette étape 1016 de récupération permet d'assurer qu'en cas de violation du contrat de service d'un module 40, causant une surconsommation de ressources matérielles par ce module 40, les autres modules 40 ne soient pas pénalisés pendant plus d'un cycle sur leur temps d'exécution. En d'autres termes, l'étape 1016 de récupération permet de garantir la cohabitation de plusieurs modules 40 tout en préservant le comportement temps réel.

En variante, l'étape 1016 peut être réalisée différemment.

Par exemple, l'étape 1016 peut comporter, suite à la détection d'une violation du contrat de service par un module 40, le déclenchement d'une alarme pour avertir l'utilisateur d'un défaut de fonctionnement, puis l'arrêt du module 40 fautif.

Selon une autre variante, l'arrêt du module 40 peut être suivi par l'utilisation du créneau temporel suivant pour exécuter les autres modules 40 qui n'auraient pas pu être exécutés correctement du fait de la violation. Une fois ce cycle terminé, une tentative de redémarrage du module 40 fautif peut être effectuée, par exemple comme décrit en référence à la figure 14.

D'autre part, l'étape 1016 peut aussi être réalisée différemment lorsque la violation du contrat de service porte sur une ressource matérielle autre que le temps d'exécution.

Selon encore d'autres variantes, la stratégie est différente selon la valeur de criticité du module fautif, telle que déclarée dans le contrat de service. En effet, les fonctions liées à la protection de l'appareil 2 présentent une criticité plus élevée que d'autres fonctions, telles que les fonctions de mesure. Selon la stratégie globale de fonctionnement de l'appareil 2, il peut être préférable, en cas de violation, de repousser autant que possible l'arrêt des modules 40 implémentant ces fonctions, par exemple en vue d'assurer une continuité de service de l'appareil 2. Dans ce cas, si plusieurs violations sont détectées, c'est le module 40 présentant une criticité moindre qui sera arrêté le premier, par exemple au moyen des étapes précitées.

Dans d'autres cas, la sécurité peut être privilégiée, en forçant l'appareil 2 à basculer dans une position de sécurité, par exemple en forçant l'ouverture des contacts séparables du bloc de coupure 4.

Grâce à l'invention, il est possible de concilier à la fois l'aspect modulaire du logiciel embarqué dans le calculateur 10 et le respect des contraintes d'exécution en temps réel de ce logiciel.

Comme les modules logiciels 40 présentent une structure modulaire et qu'ils peuvent être installés ou désinstallés dynamiquement, alors la gestion logicielle du le calculateur 10 de l'appareil 2 est facilitée pour les utilisateurs. Cette structure modulaire offre également plus possibilités pour faire évoluer le fonctionnement de l'appareil 2 au cours du temps. De plus, en préservant le fonctionnement en temps réel des logiciels embarqués, on évite de nuire à la sécurité de fonctionnement de l'appareil 2.

Comme expliqué précédemment, la structure modulaire des modules 40 est permise en partie grâce aux réceptacles 50. Cette structure modulaire est également permise par le contrat de service 44, ainsi que par les mécanismes permettant de vérifier si le contrat de service est respecté, soit à l'installation soit en cours d'exécution, ou les deux, ainsi que par la mise en place de la stratégie de recouvrement en cas de violation du contrat de service. Les contrats de service 44 ainsi que le fonctionnement de l'ordonnanceur 26 permettent également d'assurer le fonctionnement en temps réel des modules 40.

Les modes de réalisation et les variantes envisagés ci-dessus peuvent être combinés entre eux pour générer de nouveaux modes de réalisation.

## Revendications

1. Procédé de gestion de modules logiciels (40) embarqués pour un calculateur électronique (10) embarqué d'un appareil électrique de coupure (2) d'un courant électrique, dans lequel ce procédé comporte des étapes :
a) d'acquisition (1020), par un système de gestion (20) de modules logiciels du calculateur électronique (10) de l'appareil de coupure (2), d'un module logiciel (40) comprenant un code exécutable (42) et un contrat de service (44) déclarant les ressources matérielles requises par le code exécutable (42) lors de son exécution par le calculateur électronique ;
b) d'installation (1004) du module logiciel (40) à l'intérieur d'un réceptacle hôte (50), par le système de gestion (20), ce réceptacle hôte appartenant à un ensemble de réceptacles hôtes (50) destinés à former chacun un environnement d'exécution d'un module logiciel (40), chaque réceptacle (50) comportant à cet effet un emplacement mémoire défini statiquement à l'intérieur d'une mémoire (14) du calculateur électronique (10) et étant associé à un sous-ensemble (52) de ressources matérielles du calculateur électronique (10) ;
c) d'exécution (1010) du module logiciel (40) par le calculateur électronique (10) ;
dans lequel l'étape c) comporte, lors de l'exécution du module logiciel (40), une étape consistant à vérifier (1012), au moyen du système de gestion (20), si l'exécution du module logiciel (40) respecte le contrat de service (44) de ce module logiciel (40), dans lequel ladite exécution est autorisée à se poursuivre si le contrat de service est respecté et en ce que, si l'exécution du module logiciel (40) est identifiée comme ne respectant pas le contrat de service, une étape de récupération (1016) est mise en place dans le but d'interrompre l'exécution du module logiciel (40) par le calculateur électronique (10),
et dans lequel, lors de l'étape c), l'exécution du code (42) comporte l'exécution de plusieurs tâches en temps réel par une unité logique de calcul (12) du calculateur électronique (10), chaque tâche étant associée à une fréquence d'exécution prédéfinie, et dans lequel l'exécution des tâches par l'unité logique de calcul (12) est régulée par un premier ordonnanceur (26) implémenté par le système de gestion (20) puis par un deuxième ordonnanceur implémenté par un système d'exploitation (18) en temps réel du calculateur électronique (10), le premier ordonnanceur (26) autorisant sélectivement l'exécution des tâches en attente d'exécution en fonction de leur fréquence d'exécution et leur affectant un niveau de priorité d'exécution pour le deuxième ordonnanceur qui dépend de la fréquence d'exécution définie pour cette tâche.

2. Procédé selon la revendication 1, **caractérisé en ce que** le procédé comporte, avant l'étape b), une étape préalable de vérification (1002) du contrat de service (44) du module logiciel (40), l'installation du module logiciel (40) étant refusée si les ressources matérielles requises par le contrat de service (44) ne sont pas compatibles avec les ressources matérielles offertes par les réceptacles (50) disponibles.

3. Procédé selon la revendication 1 ou 2, **caractérisé en ce que**, parallèlement à l'étape c), au moins un deuxième module logiciel (40) distinct installé dans un autre réceptacle (50) distinct est également en cours d'exécution, une deuxième étape consistant à vérifier (1012) si l'exécution de ce deuxième module logiciel (40) respecte le contrat de service (44) de ce deuxième module logiciel (40) étant également mise en œuvre.

4. Procédé selon l'une quelconque des revendications précédentes, **caractérisé en ce qu'**un premier groupe de tâches regroupe des tâches associées à une première fréquence d'exécution prédéfinie, **en ce qu'**un deuxième groupe de tâches regroupe des tâches associées à une deuxième fréquence d'exécution prédéfinie inférieure à la première fréquence d'exécution,
**en ce que**, lors de l'exécution du module logiciel (40), l'exécution des tâches appartenant au premier groupe est déclenchée (902) par le premier ordonnanceur (26) lors de chaque réception (900) d'un signal de cadencement périodique,
et **en ce que** l'exécution des tâches appartenant au deuxième groupe est déclenchée (914) périodiquement par le premier ordonnanceur (26), les tâches appartenant au deuxième groupe présentant une priorité plus basse que les tâches appartenant au premier groupe.

5. Procédé selon l'une quelconque des revendications précédentes, **caractérisé en ce que** l'appareil de coupure (2) est connecté à une installation électrique pour interrompre un courant électrique alternatif au sein de cette installation électrique, les fréquences d'exécution étant choisies en fonction de la fréquence du courant électrique alternatif.

6. Procédé selon l'une quelconque des revendications précédentes, **caractérisé en ce que** la stratégie de récupération mise en œuvre lors de l'étape de récupération (1016) en cas de violation du contrat de service (44) d'un module logiciel (40) comporte l'arrêt de l'exécution du module logiciel (40).

7. Procédé selon l'une quelconque des revendications précédentes, **caractérisé en ce que** la stratégie de récupération mise en œuvre lors de l'étape de récupération (1016) en cas de violation du contrat de service (44) d'un module logiciel (40) est choisie en fonction d'une valeur de criticité du code exécutable (42) déclarée dans le contrat de service (44) de ce module logiciel (40).

8. Appareil de coupure (2) d'un courant électrique comprenant un calculateur électronique embarqué (10) apte à piloter le fonctionnement de l'appareil de coupure (2) et destiné à recevoir des modules logiciels embarqués (40),
le calculateur électronique (10) comportant un ensemble de réceptacles hôtes (50) destinés à former chacun un environnement d'exécution d'un module logiciel (40), chaque réceptacle (50) comportant à cet effet un emplacement mémoire défini statiquement à l'intérieur d'une mémoire (14) du calculateur électronique (10) et étant associé à un sous-ensemble (52) de ressources matérielles du calculateur électronique (10),
ce calculateur électronique (10) implémentant en outre un système de gestion (20) programmé pour mettre en œuvre des étapes :
a) d'acquisition d'un module logiciel (40) comprenant un code exécutable (42) et un contrat de service (44) déclarant les ressources matérielles requises par le code exécutable (42) lors de son exécution par le calculateur électronique ;
b) d'installation (1004) du module logiciel (40) à l'intérieur d'un des réceptacles (50) ;
c) d'exécution (1010) du module logiciel (40) par le calculateur électronique (10), l'étape c) comportant, lors de l'exécution du module logiciel (40), une étape consistant à vérifier (1012) si l'exécution du module logiciel (40) respecte le contrat de service (44) de ce module logiciel (40), l'exécution est autorisée à se poursuivre si le contrat de service est respectée et, si l'exécution du module logiciel (40) est identifiée comme ne respectant pas le contrat de service, une étape de récupération (1016) est mise en place dans le but d'interrompre l'exécution du module logiciel (40) par le calculateur électronique (10)
et lors de l'étape c), l'exécution du code (42) comporte l'exécution de plusieurs tâches en temps réel par une unité logique de calcul (12) du calculateur électronique (10), chaque tâche étant associée à une fréquence d'exécution prédéfinie, et dans lequel l'exécution des tâches par l'unité logique de calcul (12) est régulée par un premier ordonnanceur (26) implémenté par le système de gestion (20) puis par un deuxième ordonnanceur implémenté par un système d'exploitation (18) en temps réel du calculateur électronique (10), le premier ordonnanceur (26) autorisant sélectivement l'exécution des tâches en attente d'exécution en fonction de leur fréquence d'exécution et leur affectant un niveau de priorité d'exécution pour le deuxième ordonnanceur qui dépend de la fréquence d'exécution définie pour cette tâche.

9. Appareil de coupure (2) selon la revendication 8, **caractérisé en ce que** le calculateur électronique (10) est en outre programmé pour mettre en œuvre, avant l'étape b), une étape préalable de vérification (1002) du contrat de service (44) du module logiciel (40), l'installation du module logiciel (40) étant refusée si les ressources matérielles requises par le contrat de service (44) ne sont pas compatibles avec les ressources matérielles offertes par les réceptacles (50) disponibles.

## Patentansprüche

1. Verfahren zum Verwalten von integrierten Softwaremodulen (40) für einen integrierten elektronischen Rechner (10) eines elektrischen Schaltgeräts (2) zum Schalten von elektrischem Strom, wobei das Verfahren die folgenden Schritte beinhaltet:
a) Erfassen (1020), durch ein System zum Verwalten (20) von Softwaremodulen des elektronischen Rechners (10) des Schaltgeräts (2), eines Softwaremoduls (40), das ausführbaren Code (42) und einen Servicevertrag (44), der die vom ausführbaren Code (42) bei seiner Ausführung durch den elektronischen Rechner geforderten Hardwareressourcen angibt, umfasst;
b) Installation (1004) des Softwaremoduls (40) im Inneren einer Host-Aufnahme (50) durch das Verwaltungssystem (20), wobei diese Host-Aufnahme zu einer Menge von Host-Aufnahmen (50) gehört, die dazu bestimmt sind, jeweils eine Ausführungsumgebung eines Softwaremoduls (40) zu bilden, wobei jede Aufnahme (50) zu diesem Zweck einen statisch definierten Speicherplatz in einem Speicher (14) des elektronischen Rechners (10) beinhaltet und einer Teilmenge (52) von Hardwareressourcen des elektronischen Rechners (10) zugeordnet ist;
c) Ausführen (1010) des Softwaremoduls (40) durch den elektronischen Rechner (10), wobei Schritt c) bei der Ausführung des Softwaremoduls (40) einen Schritt beinhaltet, der darin besteht, mittels des Verwaltungssystems (20) zu überprüfen (1012), ob die Ausführung des Softwaremoduls (40) den Servicevertrag (44) dieses Softwaremoduls (40) erfüllt, wobei die Fortsetzung der Ausführung zugelassen wird, wenn der Servicevertrag erfüllt wird, und, wenn die Ausführung des Softwaremoduls (40) als den Servicevertrag nicht erfüllend erkannt wird, ein Wiederherstellungsschritt (1016) implementiert wird, um die Ausführung des Softwaremoduls (40) durch den elektronischen Rechner (10) zu unterbrechen,
und beim Schritt c) die Ausführung des Codes (42) die Ausführung mehrerer Aufgaben in Echtzeit durch eine logische Recheneinheit (12) des elektronischen Rechners (10) beinhaltet, wobei jede Aufgabe einer vorgegebenen Ausführungsfrequenz zugeordnet ist und die Ausführung der Aufgaben durch die logische Recheneinheit (12) durch einen ersten vom Verwaltungssystem (20) implementierten Scheduler (26), dann durch einen zweiten von einem Echtzeit-Betriebssystem (18) des elektronischen Rechners (10) implementierten Scheduler geregelt wird, wobei der erste Scheduler (26) die Ausführung der auf Ausführung wartenden Aufgaben selektiv in Abhängigkeit von ihrer Ausführungsfrequenz zulässt und ihnen eine Ausführungsprioritätsstufe für den zweiten Scheduler zuweist, die von der für diese Aufgabe definierten Ausführungsfrequenz abhängt.

2. Verfahren nach Anspruch 1, **dadurch gekennzeichnet, dass** das Verfahren vor dem Schritt b) einen vorherigen Überprüfungsschritt (1002) zum Überprüfen des Servicevertrags (44) des Softwaremoduls (40) beinhaltet, wobei die Installation des Softwaremoduls (40) verweigert wird, wenn die vom Servicevertrag (44) geforderten Hardwareressourcen nicht mit den von den verfügbaren Aufnahmen (50) angebotenen Hardwareressourcen vereinbar sind.

3. Verfahren nach Anspruch 1 oder 2, **dadurch gekennzeichnet, dass** parallel zum Schritt c) mindestens ein zweites verschiedenes Softwaremodul (40), das in einer anderen verschiedenen Aufnahme (50) installiert ist, ebenfalls in Ausführung befindlich ist, wobei ein zweiter Schritt, der darin besteht zu überprüfen (1012), ob die Ausführung dieses zweiten Softwaremoduls (40) den Servicevertrag (44) dieses zweiten Softwaremoduls (40) erfüllt, ebenfalls ausgeführt wird.

4. Verfahren nach einem der vorhergehenden Ansprüche, **dadurch gekennzeichnet, dass** die erste Aufgabengruppe Aufgaben zusammenfasst, die einer ersten vorgegebenen Ausführungsfrequenz zugeordnet sind, und dass eine zweite Aufgabengruppe Aufgaben zusammenfasst, die einer zweiten vorgegebenen Ausführungsfrequenz zugeordnet sind, die geringer als die erste Ausführungsfrequenz ist,
dadurch, dass bei der Ausführung des Softwaremoduls (40) die Ausführung der zur ersten Gruppe gehörenden Aufgaben vom ersten Scheduler (26) bei jedem Empfangen (900) eines periodischen Taktsignals ausgelöst (902) wird,
und dadurch, dass die Ausführung der zur zweiten Gruppe gehörenden Aufgaben periodisch vom ersten Scheduler (26) ausgelöst (914) wird, wobei die zur zweiten Gruppe gehörenden Aufgaben eine niedrigere Priorität als die zur ersten Gruppe gehörenden Aufgaben aufweisen.

5. Verfahren nach einem der vorhergehenden Ansprüche, **dadurch gekennzeichnet, dass** das Schaltgerät (2) an eine elektrische Anlage angeschaltet ist, um einen elektrischen Wechselstrom in dieser elektrischen Anlage zu unterbrechen, wobei die Ausführungsfrequenzen in Abhängigkeit von der Frequenz des elektrischen Wechselstroms gewählt sind.

6. Verfahren nach einem der vorhergehenden Ansprüche, **dadurch gekennzeichnet, dass** die beim Wiederherstellungsschritt (1016) im Fall der Verletzung des Servicevertrags (44) eines Softwaremoduls (40) ausgeführte Wiederherstellungsstrategie das Stoppen der Ausführung des Softwaremoduls (40) beinhaltet.

7. Verfahren nach einem der vorhergehenden Ansprüche, **dadurch gekennzeichnet, dass** die beim Wiederherstellungsschritt (1016) im Fall der Verletzung des Servicevertrags (44) eines Softwaremoduls (40) ausgeführte Wiederherstellungsstrategie in Abhängigkeit von einem Kritikalitätswert des ausführbaren Codes (42) gewählt wird, der im Servicevertrag (44) dieses Softwaremoduls (40) angegeben wird.

8. Schaltgerät (2) zum Schalten eines elektrischen Stroms, das einen integrierten elektronischen Rechner (10) umfasst, der geeignet ist, den Betrieb des Schaltgeräts (2) zu steuern, und dazu bestimmt ist, integrierte Softwaremodule (40) aufzunehmen,
wobei der elektronische Rechner (10), der beinhalteter, er eine Menge von Host-Aufnahmen (50) beinhaltet, die dazu bestimmt sind, jeweils eine Ausführungsumgebung eines Softwaremoduls (40) zu bilden, wobei jede Aufnahme (50) zu diesem Zweck einen statisch definierten Speicherplatz in einem Speicher (14) des elektronischen Rechners (10) beinhaltet und einer Teilmenge (52) von Hardwareressourcen des elektronischen Rechners (10) zugeordnet ist,
wobei dieser elektronische Rechner (10) ferner ein Verwaltungssystem (20) implementiert, das dazu programmiert ist, die folgenden Schritte auszuführen:
a) Erfassen eines Softwaremoduls (40), das ausführbaren Code (42) und einen Servicevertrag (44), der die vom ausführbaren Code (42) bei seiner Ausführung durch den elektronischen Rechner geforderten Hardwareressourcen angibt, umfasst;
b) Installation (1004) des Softwaremoduls (40) im Inneren einer der Aufnahmen (50);
c) Ausführen (1010) des Softwaremoduls (40) durch den elektronischen Rechner (10), wobei Schritt c) bei der Ausführung des Softwaremoduls (40) einen Schritt beinhaltet, der darin besteht zu überprüfen (1012), ob die Ausführung des Softwaremoduls (40) den Servicevertrag (44) dieses Softwaremoduls (40) erfüllt, wobei die Fortsetzung der Ausführung zugelassen wird, wenn der Servicevertrag erfüllt wird, und, wenn die Ausführung des Softwaremoduls (40) als den Servicevertrag nicht erfüllend erkannt wird, ein Wiederherstellungsschritt (1016) implementiert wird, um die Ausführung des Softwaremoduls (40) durch den elektronischen Rechner (10) zu unterbrechen,
und beim Schritt c) die Ausführung des Codes (42) die Ausführung mehrerer Aufgaben in Echtzeit durch eine logische Recheneinheit (12) des elektronischen Rechners (10) beinhaltet, wobei jede Aufgabe einer vorgegebenen Ausführungsfrequenz zugeordnet ist, und
die Ausführung der Aufgaben durch die logische Recheneinheit (12) durch einen ersten vom Verwaltungssystem (20) implementierten Scheduler (26), dann durch einen zweiten von einem Echtzeit-Betriebssystem (18) des elektronischen Rechners (10) implementierten Scheduler geregelt wird, wobei der erste Scheduler (26) die Ausführung der auf Ausführung wartenden Aufgaben selektiv in Abhängigkeit von ihrer Ausführungsfrequenz zulässt und ihnen eine Ausführungsprioritätsstufe für den zweiten Scheduler zuweist, die von der für diese Aufgabe definierten Ausführungsfrequenz abhängt.

9. Schaltgerät (2) nach Anspruch 8, **dadurch gekennzeichnet, dass** der elektronische Rechner (10) ferner dazu programmiert ist, vor dem Schritt b) einen vorherigen Schritt des Überprüfens (1002) des Servicevertrags (44) des Softwaremoduls (40) auszuführen, wobei die Installation des Softwaremoduls (40) verweigert wird, wenn die vom Servicevertrag (44) geforderten Hardwareressourcen nicht mit den von den verfügbaren Aufnahmen (50) angebotenen Hardwareressourcen vereinbar sind.

## Claims

1. Method for managing embedded software modules (40) for an electronic computer (10) embedded in an electrical switching device (2) for an electric current, this method comprises steps:
a) for acquisition (1020), by a management system (20), of software modules for the electronic computer (10) of the switching device (2), of a software module (40) comprising an executable code (42) and a service contract (44) declaring the hardware resources required by the executable code (42) during its execution by the electronic computer;
b) for installation (1004) of the software module (40) inside a host receptacle (50), by the management system (20), this host receptacle belonging to an assembly of host receptacles (50) each intended to form a run-time environment for executing a software module (40), each receptacle (50) comprising, for this purpose, a memory location defined statically inside of a memory (14) of the electronic computer (10) and being associated with a sub-assembly (52) of hardware resources of the electronic computer (10);
c) for executing (1010) of the software module (40) by the electronic computer (10);
the step c) comprises, when the software module is executed (40), a step consisting in verifying (1012), by means of the management system (20), whether the execution of the software module (40) complies with the service contract (44) of this software module (40), said execution is authorized to proceed if it complies with the service contract and, if the execution of the software module (40) is identified as not complying with the service contract, a recovery step (1016) is implemented with the aim of interrupting the execution of the software module (40) by the electronic computer (10),
and during the step c), the execution of the code (42) comprises the execution of several tasks in real time by a logic processing unit (12) of the electronic computer (10), each task being associated with a predefined frequency of execution, and the execution of the tasks by the logic processing unit (12) is regulated by a first sequencer (26) implemented by the management system (20) then by a second sequencer implemented in real time by an operating system (18) of the electronic computer (10), the first sequencer (26) selectively authorizing the execution of the tasks waiting to be executed as a function of their frequency of execution and assigning them an execution priority level for the second sequencer which depends on the frequency of execution defined for this task.

2. Method according to Claim 1, **characterized in that** the method comprises, prior to the step b), a prior step (1002) for verifying the service contract (44) of the software module (40), the installation of the software module (40) being refused if the hardware resources required by the service contract (44) are not compatible with the hardware resources offered by the available receptacles (50).

3. Method according to Claim 1 or 2, **characterized in that**, in parallel with the step c), at least a second separate software module (40) installed in another separate receptacle (50) is also being run, a second step consisting in verifying (1012) whether the execution of this second software module (40) complies with the service contract (44) of this second software module (40) also being implemented.

4. Method according to any one of the preceding claims, **characterized in that**, a first group of tasks assembles tasks associated with a first predefined frequency of execution, **in that** a second group of tasks assembles tasks associated with a second predefined frequency of execution lower than the first frequency of execution,
**in that**, when the software module (40) is executed, the execution of the tasks belonging to the first group is triggered (902) by the first sequencer (26) when each periodic timing signal is received (900),
and **in that** the execution of the tasks belonging to the second group is triggered (914) periodically by the first sequencer (26), the tasks belonging to the second group having a lower priority than the tasks belonging to the first group.

5. Method according to any one of the preceding claims, **characterized in that** the switching device (2) is connected to an electrical installation for interrupting an AC electric current within this electrical installation, the frequencies of execution being chosen as a function of the frequency of the AC electric current.

6. Method according to any one of preceding claims, **characterized in that** the recovery strategy implemented during the recovery step (1016) in the case of violation of the service contract (44) of a software module (40) comprises the interruption of the execution of the software module (40).

7. Method according to any one of preceding claims, **characterized in that** the recovery strategy implemented during the recovery step (1016) in the case of violation of the service contract (44) of a software module (40) is chosen according to a criticality value of the executable code (42) declared in the service contract (44) of this software module (40).

8. Device (2) for switching an electric current comprising an embedded electronic computer (10) designed to control the operation of the switching device (2) and intended to receive embedded software modules (40),
the electronic computer (10) comprising it comprises an assembly of host receptacles (50) each intended to form an environment for executing a software module (40), each receptacle (50) comprising, for this purpose, a memory location defined statically inside of a memory (14) of the electronic computer (10) and being associated with a sub-assembly (52) of hardware resources of the electronic computer (10),
this electronic computer (10) furthermore implementing a management system (20) programmed for implementing steps:
a) for acquiring a software module (40) comprising an executable code (42) and a service contract (44) declaring the hardware resources required by the executable code (42) when it is executed by the electronic computer;
b) for installing (1004) the software module (40) inside of one of the receptacles (50);
c) for executing (1010) the software module (40) by the electronic computer (10), the step c) comprising, when the software module (40) is executed, a step consisting in verifying (1012) whether the execution of the software module (40) complies with the service contract (44) for this software module (40), the execution is authorized to proceed if it complies with the service contract and, if the execution of the software module (40) is identified as not complying with the service contract, a recovery step (1016) is implemented with the aim of interrupting the execution of the software module (40) by the electronic computer (10),
and during the step c), the execution of the code (42) comprises the execution of several tasks in real time by a logic processing unit (12) of the electronic computer (10), each task being associated with a predefined frequency of execution, and the execution of the tasks by the logic processing unit (12) is regulated by a first sequencer (26) implemented by the management system (20) then by a second sequencer implemented in real time by an operating system (18) of the electronic computer (10), the first sequencer (26) selectively authorizing the execution of the tasks waiting to be executed as a function of their frequency of execution and assigning them an execution priority level for the second sequencer which depends on the frequency of execution defined for this task.

9. Switching device (2) according to Claim 8, **characterized in that** the electronic computer (10) is furthermore programmed for implementing, before the step b), a prior step (1002) for verifying the service contract (44) of the software module (40), the installation of the software module (40) being refused if the hardware resources required by the service contract (44) are not compatible with the hardware resources offered by the available receptacles (50).
